# EUROPEAN PATENT APPLICATION

(11) **EP 1 672 511 A2**
(43) Date of publication of application: **21.06.2006**
(21) Application number: 04792427.9
(22) Date of filing: 07.10.2004
(51) Int. Cl.: G06F 12/14

(54) **INFORMATION PROTECTION SYSTEM, STORAGE MEDIUM USED FOR THE SAME, AND STORAGE MEDIUM CONTAINING CASE**

(30) Priority: 10.10.2003 JP 2003352110
(71) Applicant: Shigetomi, Takashi, Yokohama-shi, Kanagawa-ken 224-0066 (JP)
(72) Inventor: Shigetomi, Takashi, Yokohama-shi, Kanagawa-ken 224-0066 (JP)
(74) Representative: Vossius & Partner
(86) International application number: PCT/JP2004/015199
(87) International publication number: WO 2005/036302

(57) **Abstract**

Disclosed is a simple and low cost information protection system for protecting data stored in an individual storage medium by preventing a hacker from entering. Also disclosed are a storage medium and a storage media storage case to be used for the system.

The storage medium such as an optical disc has a storage portion for storing information data and predetermined application program data for controlling at least an external device, an electronic circuit portion for reading out the data from the storage portion and controlling an external device based on the read-out application program, and permission information for controlling whether permit or refuse access to the storage portion. A plurality of storage media are stored in a storage case for enabling a person to take out the predetermined storage medium from the storage media storage case only if the person is identified as one of the previously registered particular persons. The taken out storage medium is loaded in an external device. When the storage medium is accessed from an external device, such access is enabled only if permitted based on the permission information.

## Description

### TECHNICAL FIELD:

The present invention relates to low cost and simple information protection system for preventing hackers from accessing and protecting data stored in a storage medium, a storage medium to be used therefor and a storage medium storage case.

### BACKGROUND ART:

In recent years, electronics are widely used in various areas of our life including all business fields as well as medial and welfare fields and networking in communication is accelerated, thereby significantly improving convenience. As a result of application of electronics, various kinds of information are normally stored in a storage (or recording) medium in personal computers (PCs) and various kinds of storage media are widely used. Hard discs (HDDs) are mostly used because of their large storage capacity and relatively reasonable price. However, in consideration of not only storage capacity but also portability, price and friendliness of the material (plastics) to environment in case of disposal, optical discs are attracting interest as promising storage media in recent years.

Incidentally, a basic resident register network has recently been established, in which all local governments and the central government are integrated in a network and private information of all residents in any city, town or village are stored in a database so that such private information can be accessible from any location within the country.

Such basic resident register network enables each municipality to install a communication server by way of a firewall. Existing basic resident management system can also be connected to the communication server. It is basically possible that the central and local government organizations can send or receive necessary information by interconnecting the communication server and servers in each municipality and the Municipality Information Center in Tokyo using a dedicated line.

Since confidential information such as private information are handled in this type of network, it is absolutely necessary to have very high degree of security. On the other hand, in certain local governments, since there are installed an internal LAN to be connected to internet by way of a firewall, there is a possibility that someone may illegally gain access to the system through internet. If once accessed to the system, there is a possibility that the person may invade into the entire system.

In order to solve such problem, countermeasures have been made to use independently developed protocols for the network inside the firewall of the communication servers in the local governments or to independently develop even application software to be used with the servers. However, such protocols or application software independently developed by local governments are tend to be relatively large scale and new protocols or application software must be developed if once broken by a hacker. As a result, this is a never lasting struggle with hackers.

Such problems are, of course, not limited to the basic resident register network and similar networks and storage media are subject to such problems.

As described hereinabove, any conventional network connected to internet cannot be completely free from illegal access by hackers even if a firewall may be provided.

### SUMMARY OF THE INVENTION:

It is, therefore, an object of the present invention to provide a simple and low cost information protection system capable of preventing hackers from accessing and protecting data that are stored in individual storage medium, storage medium to be used therefor and storage medium storage (or accommodation) case.

In order to solve the above problems, the information protection system, the storage medium to be used therefor and the storage medium storage case according to the present invention have the following unique constructions.
(1) An information protection system comprising a storage medium to be loaded on an external device, the storage medium including a storage portion for storing information data and at least predetermined application program data for controlling the external device, an electronic circuit portion for controlling the external device based on the data and the application program that are read out of the storage portion, and also permission information for controlling whether to permit or refuse access to the storage portion so that, at the time of accessing by the external device to the storage medium, such access is enabled only if permitted based on the permission information.
(2) An information protection system comprising a plurality of external devices each loaded with a storage medium including a storage portion in which information data and at least a predetermined application program for controlling an external device are stored, an electronic circuit portion for reading out the data and controlling the external device based on the read-out application program, and permission information stored in the storage portion for controlling whether permit or refuse access to the storage portion in such a manner that some of the permission information stored in the storage media are different from the others, and at the time of accessing to the storage medium by the external device, such access is enabled only if permitted based on the permission information.
(3) In a network system comprising an independent network having a PC connected to a dedicated line and a normal network connected to internet and having a plurality of PCs connected to a LAN,
   an information protection system characterized in that each of the PCs connected to the normal network is loaded with a storage medium having a storage portion for storing information data and predetermined application program data for controlling at least the PC, an electronic circuit portion for reading out the data from the storage portion and controlling the PC based on the read-out application program, and permission information stored in the storage portion for controlling whether permit or refuse access to the storage portion so that at the time of accessing the storage medium by the PC, such access is permitted only if permitted based on the permission information.
(4) An information protection system comprising a storage case for storage of a plurality of storage media each having a storage portion for storing information data and predetermined application program data for controlling at least a PC, an electronic circuit portion for reading out the data from the storage portion and controlling the external device based on the read-out application program, and permission information stored in the storage portion for controlling whether permit or refuse access to the storage portion in such a manner that a particular storage medium is enabled to be taken out of the storage case only if he/she is certified as one of previously registered particular persons,
   wherein the taken-out storage medium is loaded in the external device and, at the time of access to the storage medium by the external device, such access is enabled only if permitted based on the permission information.
(5) An information protection system comprising a storage case for storing a plurality of storage media each having a storage portion for storing information data and predetermined application program data for controlling at least an external device, an electronic circuit portion for reading out the data from the storage portion and controlling the external device based on the read-out application program, and permission information stored in the storage portion for controlling whether permit of refuse access to the storage portion in such a manner that a predetermined storage media are enabled to be taken out of the storage case only if he/she is certified as one of previously registered particular parsons,
   wherein the taken-out storage media are loaded in the plurality of external devices, the permission information stored in some of the storage media are different from others, and at the time of accessing to the storage media by the external devices, such access is enabled only if permitted based on the permission information.
(6) In a network system comprising an independent network having a PC connected to a dedicated line and a normal network having a plurality of PCs connected to a LAN and also connected to internet,
   an information protection system comprising a storage case for storing a storage medium to be connected to each PC in the normal network and having a storage portion for storing information data and predetermined application program data for controlling at least the PC, an electronic circuit portion for reading out the data from the storage portion and controlling the PC based on the read-out application program, and permission information stored in the storage portion for controlling whether permit or refuse access to the storage portion in such a manner that the predetermined storage medium is enabled to be taken out of the storage media storage case only if he/she is certified as one of previously registered particular persons,
   wherein the taken-out storage medium is loaded in an external device and at the time of accessing the storage medium by the PCs, such access is enabled only if permitted based on the permission information.
(7) An information protection system of either one of claims 1 to 6, wherein the external device is a PC connected to internet.
(8) An information protection system of either one of claims 4 to 6, further comprising means for generating warning when the storage medium is taken out despite NG in the certification result.
(9) An information protection system of either one of claims 4 to 6, further comprising means for generating warning when the storage medium is taken out and brought outside a predetermined area despite NG in the certification result.
(10) An information protection system of claim 8 or 9, wherein the warning is sent to a control center by way of a communication line.
(11) An information protection system of claim 2 or 5, wherein some of the permission information stored in the storage media as loaded in a plurality of external devices are different from others.
(12) An information protection system of either one of claims 1 to 11, the information data stored in the storage medium are encrypted and the permission information is information for decrypting the encryption.
(13) An information protection system of either one of claims 1 to 12, wherein the storage medium is an optical disc.
(14) A storage medium to be detachably loaded in an external device and having a storage portion for storing information data and predetermined application program data for controlling at least the external device, an electronic circuit portion for reading out the data from the storage portion and controlling the external device based on the read-out application program, and permission information for controlling whether permit or refuse access to the storage portion.
(15) A storage medium of claim 14, wherein the information data stored in the storage medium is encrypted and the permission information is information for decrypting the encryption.
(16) A storage medium drive unit capable of accessing to the storage portion of the storage medium of claim 14 or 15 and further comprising a drive having an interface portion for communicating with the electronic circuit portion as an integral part with the storage medium.
(17) A storage media storage case for storing a plurality of the storage media or the storage medium drive units of claim 14 or 15 and for enabling a person to take out a predetermined storage medium or the storage medium drive unit only if he/she is certified as one of previously registered particular persons.
(18) A storage media storage case of claim 16, wherein the certification is either ID or a biometric identification.
(19) A storage media storage case of claim 17 or 18, further comprising means for generating warning when the storage medium is taken out despite NG in the certification result.
(20) A storage media storage of either one of claims 17 to 19, further comprising means for generating warning when the storage medium is taken out and brought outside a predetermined area despite NG in the certification result.
(21) A storage media storage case of claim 19 or 20, wherein the warning is either a warning sound or a warning display.
(22) A storage media storage case of either one of claims 19 to 21, wherein the warning is transmitted to a control center by way of a communication line.
(23) A storage media storage case of either one of claims 17 to 22, wherein the storage media are optical discs.
(24) An information protection system, a storage medium or a storage media storage case of either one of claims 1 to 23, wherein the storage medium is accommodated in a cartridge.
(25) An information protection system, a storage medium or a storage media storage case of either one of claims 1 to 23, wherein the cartridge is capable of accommodating any storage medium.
(26) An information protection system, a storage medium or a storage media storage case of claim 24 or 25, wherein the cartridge includes a wireless communication portion for making wireless communication, an identification portion, a display portion, an audio output portion and a battery portion for driving these functional portions.
(27) An information protection system, a storage medium or a storage media storage case of claim 25, wherein the location of the cartridge is controlled by making wireless communication of the wireless communication portion, an alarm is generated when the cartridge is brought outside a predetermined area, and the alarm is transmitted to a control center by way of a wireless communication network for notifying the abnormality.
(28) An information protection system, a storage medium or a storage media storage case of claim 27, wherein the identification portion installed in the cartridge generates an alarm or notifies to the control center when a person who ties to take out the cartridge is not a registered person permitted to use (NG in certification) .
(29) An information protection system, a storage medium or a storage media storage case of claim 27, wherein justification of the storage medium is confirmed by communication between the wireless communication portion in the cartridge and the wireless communication portion as provided at the storage medium side.
(30) An information protection system, a storage medium or a storage media storage case of either one of claim 24 to 29, wherein the storage medium is an optical disc.

The information protection system, the storage medium to be used therefor and the storage medium storage case according to the present invention have the following significant practical advantages:

That is, even if any outside hacker successfully invaded into or accessed to PCs from internet or accessed to other PCs connected to the LAN that he/she has successfully accessed, the storage medium (or intelligent disc) in which confidential information is stored actively controls the PCs and is protected by individual security programs installed in the PCs, thereby providing a further barrier for more reliable protection of the confidential information. It is to be noted herein that by simply changing a security program for each disc, it acts as an independent security program, thereby enabling one to easily develop programs. Moreover, it is possible to store a plurality of storage media in a storage medium storage case and to enable only a person to be certified as one of the particular persons who are previously registered is able to pick out the storage medium. If a person is determined to be NG in certification, a warning is generated when he/she picks out the storage medium and moves it to a distant location outside the predetermined area and such warning is transmitted to a control or an administration center by way of a communication line, thereby providing control of the storage medium itself and reliable security. Additionally, if optical discs are used as the storage media, a large storage capacity can be obtained at a low cost and environmental pollution can be avoided when disposing them.

### BRIEF DESCRIPTION OF THE DRAWINGS:

In the accompanying drawings:
Fig. 1 is a system configuration of the information protection system according to the present invention;
Fig. 2A is a system diagram for describing primary operations of the embodiment as shown in Fig. 1, illustrating an example in which information stored in a storage medium at the PC side are read out by illegal accessing through internet;
Fig. 2B is a system diagram for describing primary operations of the embodiment as shown in Fig. 1, illustrating how to protect information as stored in an intelligent disc from being illegally read out through internet in the present invention ; and
Fig. 3 is a simplified drawing of an intelligent disc to be used in one embodiment of the present invention.

### BEST EMBODIMENTS TO CARRY OUT THE INVENTION:

Now, embodiments of the information protection system, the storage medium therefor and the storage medium storage case according to the present invention will be described in construction and operation with reference to the accompanying drawings.

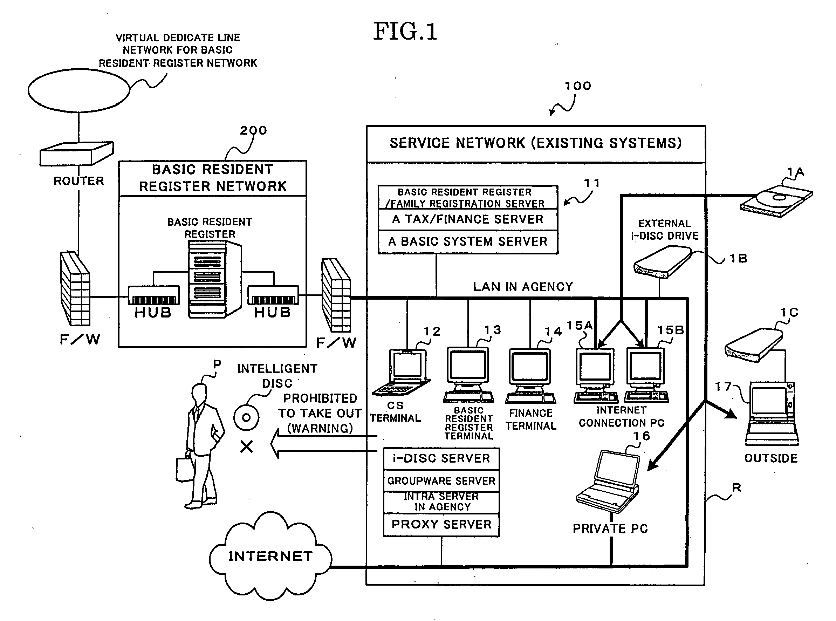

Fig. 1 illustrates a system configuration of one embodiment of the information protection system according to the present invention.

A service network in local government 100 comprises a basic resident register/family registration server, a tax/finance server, a basic system server and the like 11 that are connected to a large number of PCs 12 - 14, 15A, 15B, 16 and 17 for processing services shared by respective servers. The PCs 12, 13 and 14 are terminals designated to provide services exclusively as a CS terminal, a basic resident register terminal and a finance terminal, respectively. The PCs 15A, 15B, 16 and 17 are general purpose terminals to be used for various purposes other than the above services, wherein the PC 16 is a PC privately owned by a staff in the local government, the PC 17 is a PC connected to the service network in local government 100 and accessed for utilizing the LAN network from an outside through a public network.

Connected to the service network in local government 100 is a basic resident register network 200 that is connected to a highly secured virtually dedicated line network for the basic resident register network by way of a router, a firewall (F/W) and a hub (HUB) .

Incidentally, in such system, since sufficient countermeasures for security are not provided at the junction between the service network in local government and the basic resident register network, there is a possibility where a hacker may gain access through internet from outside to the service network in local government that is connected to internet.

It is general in a conventional system that private information data are stored in a hard disc installed in a PC or a disc (or discs) that is connected to such PC. If anyone may get in the service network in local government through internet, there is a risk that the hard disc installed in such PC or such disc (or discs) connected thereto are accessed by him/her. As a result, there is a possibility where private information as stored in the hard disc may be read out and leaked to outside.

It is also true that PCs connected to the service network in local government are not limited to PCs essentially dedicated to respective services but some other general purpose PCs including private PCs 16 may also be connected thereto for convenience reasons as mentioned hereinabove. It is general that special attentions to security are paid in the PCs designed for particular purposes but no or less attention is paid to other general purpose PCs such as the PCs 15A, 15B and 16, thereby increasing a risk to be a target for an ill-willed third party or a hacker. There encounters the same problem when gaining access from outside using the PC 17.

In accordance with the particular embodiment of the present invention, in order to prevent leakage of private information even if accessed through internet, an optical disc (referred to as an intelligent disc or i-DISC below) 1A, 1B that is detachable to any PC is used as a storage medium rather than a disc built-in a PC. An optical disc is advantages over any other type of storage media because of significantly low cost, large storage capacity and friendly to environment when disposing. The intelligent disc 1A is not integrated with a drive and is used with a PC by loading in a drive mechanism equipped within the PC. The intelligent disc 1B is an integrated intelligent disc including an integrated drive as access means to the disc.

Different from conventional optical discs, the intelligent disc contains information such as private information or the like stored therein as well as a storage or memory portion for memorizing predetermined application programs for controlling the operation of the PC in which the optical disc is loaded. Eventually, the control means is to control the operation of the PC which acts as an external device and to which the optical disc is loaded. That is, an application program (security) for prohibiting any access to read/write the information stored in the optical disc is memorized for each optical disc. Such program may be one for encrypting the information data at the time of storing in the storage portion in the optical disc (including encryption key and the like) and one for controlling access itself to the optical disc. Information including confidential information such as private information or the like is stored in the intelligent disc and also the processed information data is also stored in such intelligent disc. As a result, even if a hacker may attempt to enter the system through internet, he/she is successful to enter only the PC but is prevented from entering the intelligent disc, thereby maintaining security.

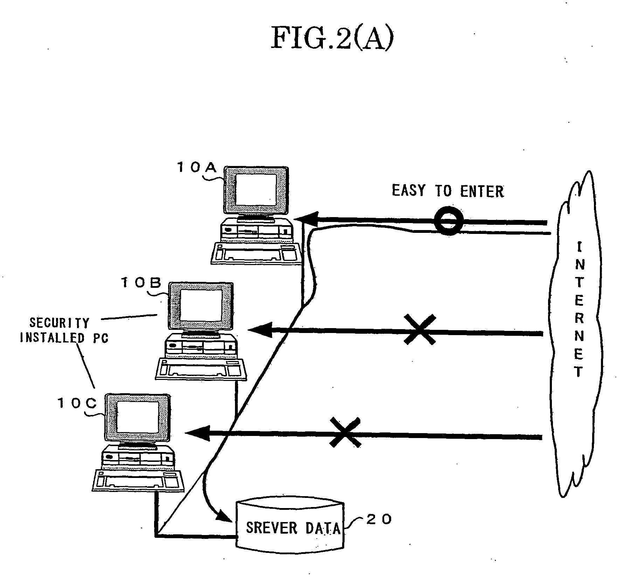

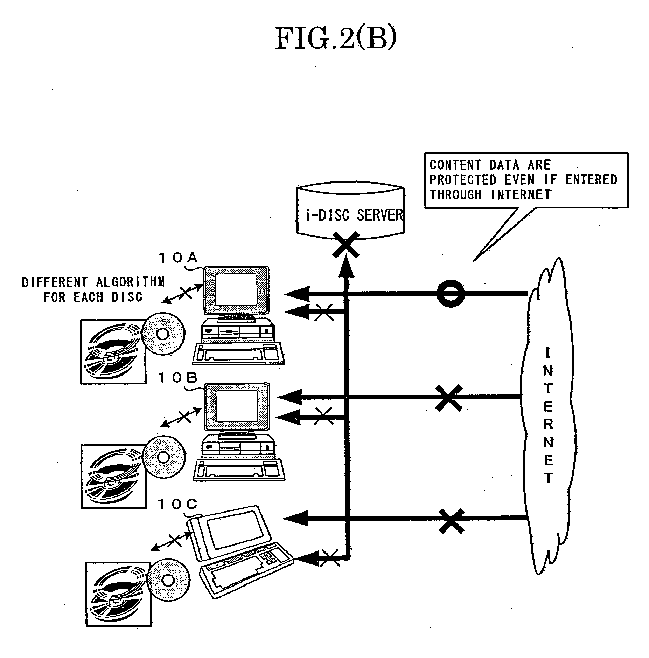

Fig. 2 (A) and (B) illustrate a conventional system to be read out by the information stored in a storage medium at the PC side by a hacker who entered through internet and a system for preventing the information from being read out by the use of the intelligent disc according to the present invention, respectively.

In Fig. 2 (A), it is normally difficult to enter a system comprising a plurality of PCs 10A to 10C each having a security program installed therein and connected to a LAN (i. e., Local Area Network). However, it is easy to enter if either one of the PCs, for example, PC 10A has no security program installed therein. Even if a security program is installed, a hacker may frequently enter through internet in many occasions. In such a case, a hacker may easily enter other PCs 10B and 10C connected to the LAN. As a result, there is a possibility that confidential information such as private information or the like stored in the server data 20 that these PCs utilize may be read out and leaked to outside.

On the contrary, the embodiment of the present invention as shown in Fig. 2 (B) employs a system configuration in which the above described intelligent disc 1 is loaded in each PC and the intelligent disc 1 is designed to store a particular program (a security program) . Accordingly, if it is designed to control the data read-out from the intelligent disc 1 using the program stored in the same intelligent disc 1, a hacker who was finally successful to enter through internet faces a further barrier which is very difficult to penetrate because of such special security program. Moreover, if a unique program is stored in each intelligent disc, even a hacker who may succeed to enter an intelligent disc of one PC needs to penetrate a barrier of another security program installed in another PC. It is the most difficult to read out data stored in all intelligent discs loaded in all PCs.

In other words, according to the present invention, the contents (the data such as private information and the like stored in the intelligent disc 1) and the security programs stored in the same intelligent disc 1 cooperate with each other and the operation modes differ from disc to another disc, thereby enabling the intelligent disc to provide very high degree of security by itself. As a result, even if the hard ware such as the PC has no security system such as a firewall, an anti-virus program or the like installed in it, the intelligent disc 1 itself is able to protect the contents, thereby providing unique and significant security as compared to a conventional system.

A simple security program to be installed in the intelligent disc is an electronic circuit provided with an identification code for enabling to mutually identify itself and a PC as an external device. It is possible to encrypt the information data stored in the intelligent disc so that the encrypted data can not be read out without the key information. It is also possible to set a special security program.

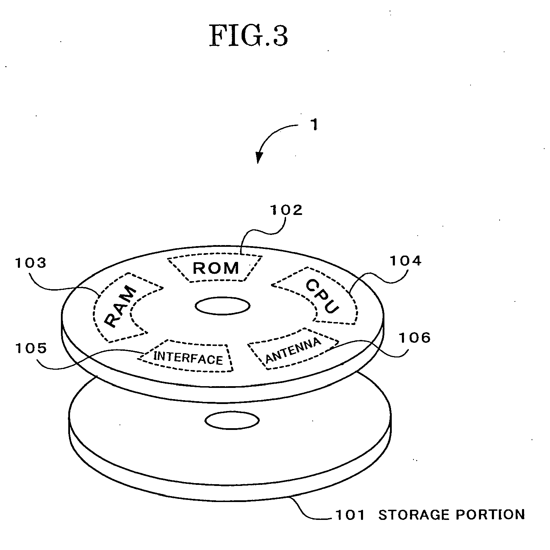

Fig. 3 illustrates a basic construction of the intelligent disc 1. In this particular embodiment, a pair of discs are attached to each other so that an information storage portion 101 for storing data such as private information or the like is formed on one surface of one disc, while provided on the surface of the other disc are a ROM 102 acting as a program storage portion for storing such information as a PC control program, a security program and the like, a RAM portion 103, an electronic circuit (CPU) 104 for reading out the program for the purpose of controlling a PC, an interface portion 105 for sending and receiving signals between the electronic circuit 104 and an external PC or a drive circuit and an antenna portion 106 for wireless signal transmission or reception to and from external devices. The wireless signal transmission or reception may be made by, for example, a radio signal but may also be made by an optical signal.

In the foregoing description on the above embodiment, the intelligent disc 1 comprises a disc main body and access is made by a drive that is provided at the PC side. However, it is also possible to provide an intelligent disc unit by integrating a disc as shown in Fig. 1 and a drive. In this case, since the disc and the drive can be integrated effectively as an integrated unit, it is possible to provide a more unique unit. Such intelligent disc unit may be systemized by inserting it into a PC card slot in a PC or by connecting to a USB (Universal Serial Bus).

Now, referring again to Fig. 1, as described hereinabove, the system according to the present invention effectively prevents a hacker from easily stealing confidential information from an intelligence disc connected to a PC that is then connected to a LAN forming a network even if he/she may succeed to enter the network through internet.

In order to further enhance security, the particular embodiment controls the use of the intelligent disc or the intelligent disc unit. A description will be made hereunder about an example of controlling the intelligent disc itself.

A plurality of intelligent discs to be used in a local government service network are controlled all together at a predetermined storage location. Access to such storage location is strictly controlled so that only authorized persons can get in and out of such location and get-ins/get-outs to and from such location are recorded.

A large number of intelligent discs are stored in a locked storage case and only persons who are registered in advance are permitted to take out such discs. They must be identified before taking out any one of such discs. The identification is carried out by identification means provided in the storage case and they are permitted to take out any intelligent disc from the storage case only if they pass the identification. It is also possible to provide identification means in the intelligent disc itself so that it cannot be taken out unless they pass the identification. Any identification means including biometric identification such as fingerprints or the like, ID card or the like may be used for identifying individuals. In case of failure in identification, it is possible to generate a warning.

If a person in charge who is permitted to take out any intelligent disc is appointed, more strict control of the intelligent discs can be made for improving security. That is, before starting the service, a person in charge takes out the necessary intelligent discs after identifying himself/herself and passes such discs to respective persons in a department or a section so that they can commence the services. At this time, it is also possible that the intelligent discs are provided with identification means for performing identification of the individual persons who engage in the services.

Preferably, the storage case is provided with a display portion such as a liquid crystal display or the like so that the name of the identified person, the name given to the intelligent disc, a warning on the occasion of failure in identification and the like may be displayed thereon.

Also, in the embodiment as shown in Fig. 1, if any person P who did not pass the identification tries to take out the storage case or any intelligent disc 1 outside the area R for the storage location or if any person who passed the identification moves outside the service area (the area where the PCs for particular services are located) R, a warning is generated or a warning signal is sent to a security service company or the like by way of a communication network for preventive actions. Such warning signal is sent by wireless means such as a high frequency radio signal, an optical signal or the like. In this manner, it is possible to prevent any risk of bringing the storage medium in which important confidential information are stored out of the predetermined area. Moreover, it is possible to set that the data information stored in the intelligent disc are destroyed or erased if once the intelligent disc 1 has been brought out of the permitted area.

Although the intelligent disc is described as an optical disc in the above embodiment, it is of course possible to hold the disc in a cartridge. In this case, various functions may be installed in the cartridge. For example, a wireless communication section for making wireless communication, an identification section, a display section, an audio output section (speaker) and the like as well as a battery section (preferably a rechargeable battery) for these functional sections may be installed in or on the cartridge. Wireless communication of the wireless section is utilized for controlling the location of the cartridges (or the intelligent discs) so that a warning is generated when any intelligent disc is brought out of the predetermined area (or the service room) or notifies the situation to a security center by way or a wireless communication network. Similarly, if any person who tries to take out the cartridge is determined to be not one of the registered persons who are permitted to use it (NG in identification process) by the identification section installed on the cartridge, it is possible to generate a warning or to notify to the security center. Such arrangement contributes to more reliable control and prevention of larger scale damages. Although the cartridge can store the intelligent disc, by adopting a flexible design to put in or take out such intelligent disc, it is possible to share the relatively expensive cartridge for storing a desired intelligent disc according to the need. In other words, an intelligent disc is fixedly stored in a cartridge in an expensive system, while a cartridge can be commonly used for plural intelligent discs in a multipurpose system.

In another embodiment of the present invention, since the antenna section 106 for making a weak wireless communication is on the intelligent disc side as shown in Fig. 3, it is possible to make a wireless communication with the cartridge for confirming justification of the intelligent disc by the communication between the cartridge side and the intelligent disc side.

Although the above description is made on the assumption that a hacker tries to enter the PC through internet, it is to be noted that the present invention should not necessarily be restricted to such particular case but is applicable to any case of preventing a hacker from trying to get access to and reading out the data stored in the storage medium connected to a PC by way of the PC operation. Additionally, the storage medium should not be limited to an optical disc but may be any storage medium having the similar construction.

Although preferred embodiments of the present invention have been described hereinabove, such embodiments are nothing but examples of the present invention and it is of course possible to make various modifications and alternations depending on particular applications.

## Claims

1. An information protection system comprising a storage medium to be loaded on an external device, the storage medium including a storage portion for storing information data and at least predetermined application program data for controlling the external device, an electronic circuit portion for controlling the external device based on the data and the application program that are read out of the storage portion, and also permission information for controlling whether to permit or refuse access to the storage portion so that, at the time of accessing by the external device to the storage medium, such access is enabled only if permitted based on the permission information.

2. An information protection system comprising a plurality of external devices each loaded with a storage medium including a storage portion in which information data and at least a predetermined application program for controlling an external device are stored, an electronic circuit portion for reading out the data and controlling the external device based on the read-out application program, and permission information stored in the storage portion for controlling whether permit or refuse access to the storage portion in such a manner that some of the permission information stored in the storage media are different from the others, and at the time of accessing to the storage medium by the external device, such access is enabled only if permitted based on the permission information.

3. In a network system comprising an independent network having a PC connected to a dedicated line and a normal network connected to internet and having a plurality of PCs connected to a LAN,
an information protection system **characterized in that** each of the PCs connected to the normal network is loaded with a storage medium having a storage portion for storing information data and predetermined application program data for controlling at least the PC, an electronic circuit portion for reading out the data from the storage portion and controlling the PC based on the read-out application program, and permission information stored in the storage portion for controlling whether permit or refuse access to the storage portion so that at the time of accessing the storage medium by the PC, such access is permitted only if permitted based on the permission information.

4. An information protection system comprising a storage case for storage of a plurality of storage media each having a storage portion for storing information data and predetermined application program data for controlling at least a PC, an electronic circuit portion for reading out the data from the storage portion and controlling the external device based on the read-out application program, and permission information stored in the storage portion for controlling whether permit or refuse access to the storage portion in such a manner that a particular storage medium is enabled to be taken out of the storage case only if he/she is certified as one of previously registered particular persons,
wherein the taken-out storage medium is loaded in the external device and, at the time of access to the storage medium by the external device, such access is enabled only if permitted based on the permission information.

5. An information protection system comprising a storage case for storing a plurality of storage media each having a storage portion for storing information data and predetermined application program data for controlling at least an external device, an electronic circuit portion for reading out the data from the storage portion and controlling the external device based on the read-out application program, and permission information stored in the storage portion for controlling whether permit of refuse access to the storage portion in such a manner that a predetermined storage media are enabled to be taken out of the storage case only if he/she is certified as one of previously registered particular parsons,
wherein the taken-out storage media are loaded in the plurality of external devices, the permission information stored in some of the storage media are different from others, and at the time of accessing to the storage media by the external devices, such access is enabled only if permitted based on the permission information.

6. In a network system comprising an independent network having a PC connected to a dedicated line and a normal network having a plurality of PCs connected to a LAN and also connected to internet,
an information protection system comprising a storage case for storing a storage medium to be connected to each PC in the normal network and having a storage portion for storing information data and predetermined application program data for controlling at least the PC, an electronic circuit portion for reading out the data from the storage portion and controlling the PC based on the read-out application program, and permission information stored in the storage portion for controlling whether permit or refuse access to the storage portion in such a manner that the predetermined storage medium is enabled to be taken out of the storage media storage case only if he/she is certified as one of previously registered particular persons,
wherein the taken-out storage medium is loaded in an external device and at the time of accessing the storage medium by the PCs, such access is enabled only if permitted based on the permission information.

7. An information protection system of either one of claims 1 to 6, wherein the external device is a PC connected to internet.

8. An information protection system of either one of claims 4 to 6, further comprising means for generating warning when the storage medium is taken out despite NG in the certification result.

9. An information protection system of either one of claims 4 to 6, further comprising means for generating warning when the storage medium is taken out and brought outside a predetermined area despite NG in the certification result.

10. An information protection system of claim 8 or 9, wherein the warning is sent to a control center by way of a communication line.

11. An information protection system of claim 2 or 5, wherein some of the permission information stored in the storage media as loaded in a plurality of external devices are different from others.

12. An information protection system of either one of claims 1 to 11, the information data stored in the storage medium are encrypted and the permission information is information for decrypting the encryption.

13. An information protection system of either one of claims 1 to 12, wherein the storage medium is an optical disc.

14. A storage medium to be detachably loaded in an external device and having a storage portion for storing information data and predetermined application program data for controlling at least the external device, an electronic circuit portion for reading out the data from the storage portion and controlling the external device based on the read-out application program, and permission information for controlling whether permit or refuse access to the storage portion.

15. A storage medium of claim 14, wherein the information data stored in the storage medium is encrypted and the permission information is information for decrypting the encryption.

16. A storage medium drive unit capable of accessing to the storage portion of the storage medium of claim 14 or 15 and further comprising a drive having an interface portion for communicating with the electronic circuit portion as an integral part with the storage medium.

17. A storage media storage case for storing a plurality of the storage media or the storage medium drive units of claim 14 or 15 and for enabling a person to take out a predetermined storage medium or the storage medium drive unit only if he/she is certified as one of previously registered particular persons.

18. A storage media storage case of claim 16, wherein the certification is either ID or a biometric identification.

19. A storage media storage case of claim 17 or 18, further comprising means for generating warning when the storage medium is taken out despite NG in the certification result.

20. A storage media storage of either one of claims 17 to 19, further comprising means for generating warning when the storage medium is taken out and brought outside a predetermined area despite NG in the certification result.

21. A storage media storage case of claim 19 or 20, wherein the warning is either a warning sound or a warning display.

22. A storage media storage case of either one of claims 19 to 21, wherein the warning is transmitted to a control center by way of a communication line.

23. A storage media storage case of either one of claims 17 to 22, wherein the storage media are optical discs.

24. An information protection system, a storage medium or a storage media storage case of either one of claims 1 to 23, wherein the storage medium is accommodated in a cartridge.

25. An information protection system, a storage medium or a storage media storage case of either one of claims 1 to 23, wherein the cartridge is capable of accommodating any storage medium.

26. An information protection system, a storage medium or a storage media storage case of claim 24 or 25, wherein the cartridge includes a wireless communication portion for making wireless communication, an identification portion, a display portion, an audio output portion and a battery portion for driving these functional portions.

27. An information protection system, a storage medium or a storage media storage case of claim 25, wherein the location of the cartridge is controlled by making wireless communication of the wireless communication portion, an alarm is generated when the cartridge is brought outside a predetermined area, and the alarm is transmitted to a control center by way of a wireless communication network for notifying the abnormality.

28. An information protection system, a storage medium or a storage media storage case of claim 27, wherein the identification portion installed in the cartridge generates an alarm or notifies to the control center when a person who ties to take out the cartridge is not a registered person permitted to use (NG in certification) .

29. An information protection system, a storage medium or a storage media storage case of claim 27, wherein justification of the storage medium is confirmed by communication between the wireless communication portion in the cartridge and the wireless communication portion as provided at the storage medium side.

30. An information protection system, a storage medium or a storage media storage case of either one of claim 24 to 29, wherein the storage medium is an optical disc.
